# EUROPEAN PATENT SPECIFICATION

(11) **EP 4 584 168 B1**
(45) Date of publication and mention of the grant of the patent: **02.09.2026**
(21) Application number: 23762438.2
(22) Date of filing: 29.08.2023
(51) Int. Cl.: B65D 1/02, B29C 49/00, B29C 49/78, B29L 31/00

(54) **BOTTLE FOR CARBONATED BEVERAGES HAVING AN IMPROVED PETALOID BASE**
FLASCHE FÜR KOHLENSÄUREHALTIGE GETRÄNKE MIT VERBESSERTER BLÜTENBLATTFORM
BOUTEILLE POUR BOISSONS GAZEUSES À BASE PÉTALOÏDE AMÉLIORÉE

(30) Priority: 08.09.2022 EP 22194527
(43) Date of publication of application: 16.07.2025
(73) Proprietor: Société des Produits Nestlé S.A., 1800 Vevey (CH)
(72) Inventor: TENIERE, Vincent, 88100 Taintrux (FR); HENRIQUEL, Laurent, 88800 Epinal (FR); DABROWSKI, Nicolas, 88800 VITTEL (FR); KLEIN, Daniel, 66740 Saarlouis (DE); BARBA CRUZ, Gabriel, 88800 Mandres sur Vair (FR)
(74) Representative: Wakasugi, Yuki
(86) International application number: PCT/EP2023/073663
(87) International publication number: WO 2024/052169

(56) References cited:
- JP-A- 2001 072 032
- JP-B2- 6 902 934
- US-A1- 2021 024 240

## Description

### Field of the Invention

This invention relates to the manufacture of self-standing blow molded plastic bottles. In particular, it relates to beverage containers for carbonated water and carbonated soft drinks.

### Background

Blow molded plastic bottles are well known for supplying carbonated beverages to the consumer market. Such bottles have a number of advantages over traditional glass bottles. These advantages include ease and safety of handling and cost of manufacture.

Blow molding of such containers ordinarily consists of inserting, into a mold with the imprint of the container, a preform previously heated to a temperature above the glass transition temperature of the material, and of injecting into the preform a fluid (particularly a gas such as air but it can also be an incompressible fluid such as water) under pressure. A stretch rod may also be employed to stretch the preform along the axis of the mold prior to and during blowing.

Such containers comprise a neck strengthened to receive for example a screw cap, a body extending from the neck and a base joined to the body. The base is shaped to allow the container to stand upright when placed on a flat surface. Typically, a bottle base comprises a number of feet arranged symmetrically around the axis of the bottle. Such a base is described as "petaloid" since it resembles the petals of a flower. More specifically, petaloid in the context of bottle base design denotes a radial organization of feet having a cross sectional shape in a transverse plane resembling the petals of a flower.

Known bottle sizes include the 0.5 litre type bottle which a type of bottle sized to accommodate 0.5 litres of carbonated beverage and the 1.5 litre type bottle which is a type of bottle sized to accommodate 1.5 litres of carbonated beverage. Other bottle sizes are known in the industry.

Amongst the design challenges is to create a base which is both strong and durable. The requirements of such containers have been codified in various industry accepted standards for example "Voluntary Standard Test Methods For PET Bottles 10/2003 Revision 1" of the International Society of Beverage Technologists. Importantly, in order to be satisfactory to the bottled carbonated drinks industry certain mechanical properties are mandated. A bottle must be designed to have mechanical resistance towards an internal pressure of 10 bar. Further, a bottle must be able to withstand a drop from 180cm onto a steel surface. Resistance towards stress cracking for 10 minutes according to a regime of submersing a bottle pressurized to 5.3 bar in a 0.200% solution of sodium hydroxide and resistance towards temperature cycle within a range typically encountered during operation are also required. Typically, such testing is performed on batches of 12 or more bottles.

To blow mold a plastic bottle having a given base design, a certain blowing pressure is required to blow the preform into an appropriately shaped mold. Higher required pressures are associated with higher costs both in terms of energy as well as robustness of the molding machinery. A blowing pressure in the order of 30 bar is generally necessary to blow-mold a PET bottle. 20 bars is currently regarded as being at the low end of what is possible. It is desirable to lower this pressure yet further. For example a blowing pressure of less than 16 bar is considered highly desirable.

JP 2001 072032 A discloses a bottle according to the preamble of claim 1.

It is therefore the objective of the present invention to propose a bottle base design for which the required blowing pressure is minimized whilst achieving the necessary mechanical properties outlined above. This result is achieved by the claimed invention.

### Summary of the Invention

The invention relates to a bottle for holding a carbonated beverage comprising a body and a base extending from the lower end of the body. The base has a substantially hemispherical underlying geometrical form and comprises a plurality of feet projecting downwards from the underlying geometrical form. Valleys separate adjacent pairs of feet with each valley having a bottom line following substantially the underlying geometrical form. Together, the feet and valleys form a petaloid foot formation having axial symmetry around the longitudinal axis of the bottle.

The bottle base is described in terms of a maximum foot depth being the maximum normal distance from the underlying geometrical form to a surface of a foot; and a sitting radius being the radius of the largest circle formed by the points of contact with the feet and a flat surface when the bottle is stood vertically on the flat surface.

For bottle bases having a ratio between the maximum foot depth and the sitting radius of 0.5 ±0.01, a bottle thus produced satisfies the mechanical properties necessary to supply carbonated soft drinks while necessitating a blowing pressure during manufacture of less than 16 bar. Preferably, a minimum radius of curvature of any part of the base is 6.5 mm. More preferably the minimum radius of curvature of any part of the base is 7mm.

Specific arrangements having a ratio between the maximum foot depth and the sitting radius of 0.51; and an angle between opposed pairs of valley flanks of adjacent pairs of feet of 37 degrees; a ratio between the maximum foot depth and the sitting radius of 0.49; and an angle between opposed pairs of valley flanks of adjacent pairs of feet of 44 degrees; a ratio between the maximum foot depth and the sitting radius of 0.50; and an angle between opposed pairs of valley flanks of adjacent pairs of feet of 44 degrees; and a ratio between the maximum foot depth and the sitting radius of 0.51; and an angle between opposed pairs of valley flanks of adjacent pairs of feet of 41 degrees, are also highly beneficial.

The bottle may comprise, in a non-exhaustive way, five feet.

The bottle can be a 0.5L type bottle or a 1.5L bottle. The bottle can be of any other standard type bottle, such as a 0.2L type bottle, a 0.33L bottle, a 1L bottle, and a 2L bottle. Bottles having other capacities can also be formed according to the present invention.

The bottle can be made of PET, PEF. Other plastics can alternatively be used.

The invention also relates to a method for manufacturing a bottle for holding a carbonated beverage comprising:
providing an openable blow mold cavity defining the form of a bottle as above-described;
providing a hollow preform;
temperature conditioning the preform;
inserting the preform into the blow mold cavity;
injecting a fluid pressurized at a pressure of less than 16 bar into the preform such that the preform is stretched outwards and into contact with the surface of the blow mold cavity so as to take on the shape of the bottle defined by the blow mold cavity;
opening the blow mold cavity and removing the bottle formed therein.

Thanks to the configuration of the bottle described above, the blowing pressure is substantially reduced compared to known methods of blow-molding a bottle.

Other particularities and advantages of the invention will also emerge from the following description.

In the accompanying drawings, given by way of non-limiting examples:
Figure 1 is a general view of a bottle made of plastic;
Figure 2 is a view of the base of a bottle showing a hemispherical geometric construction;
Figure 3 is a view of the base of a bottle showing a petaloid formation of feet and valleys;
Figure 4 is an illustration of the sitting radius of a bottle base;
Figure 5 is an alternate view of the base shown in fig. 4;
Figure 6 is an illustration showing the angle between adjacent feet of a bottle base.

### Detailed Description

Words "up" and "down" refer to a coordinate system in which the bottle is stood on a surface with its neck at the top and base at the bottom. The word "axial" is with reference to a main axis X running through the neck and the center of the base of the bottle.

It is to be understood that, throughout, standard rounding up rules apply. Therefore, an angle stated as 41 degrees, implies the range of 40.5 to 41.4 degrees.

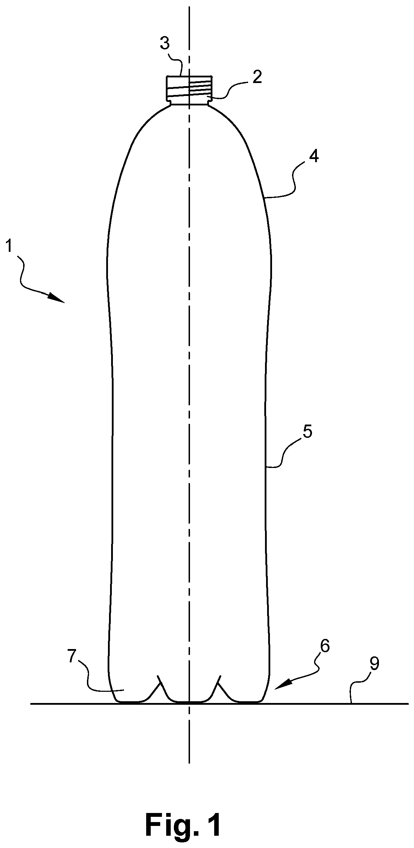

Fig. 1 shows a general view of a bottle 1 produced by stretch blow-molding of a preform made of thermoplastic material, for example PET (polyethylene terephthalate) or PEF (polyethylene-furanoate).

Said bottle 1 comprises, at an upper end, a neck 2 strengthen to support a closing lid (not shown), provided with a mouth 3 allowing the contents of the bottle to be poured or otherwise extracted such as by using a drinking straw. In the extension of the neck 2, the container 1 comprises in its upper part a shoulder 4 that widens out in the direction opposite to the neck 2, said shoulder 4 being extended by a lateral wall or body 5, which in the represented embodiment is of a shape generally cylindrical in revolution around the main axis X of the container 1. The body 5 terminates at its lower end in a base 6.

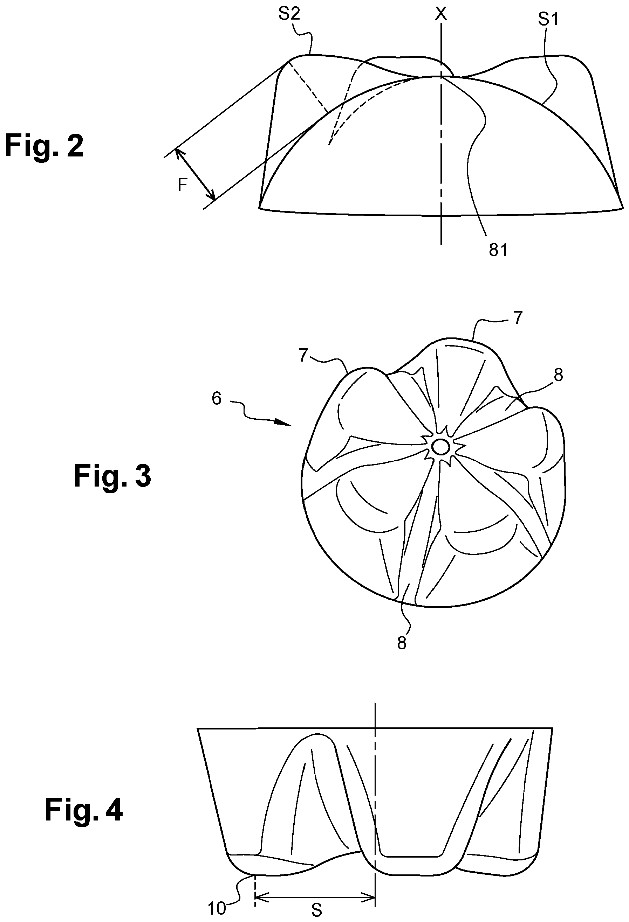

The base 6 is shown in more detail in Fig. 2 and Fig. 3. The geometrical underlying shape or form of the base 6 approximates as a hemispherical surface S1. Symmetrically arranged around the axis X and extending downwards from the underlying geometrical form S1 are a plurality of feet 7. The feet serve the function of allowing the bottle to sit upright on a surface. In some arrangements, the plurality of feet consists of five feet. In other arrangements, the plurality of feet can be three, four, six, seven or more feet. Five feet are generally used because this offers a good compromise between stability and cost of manufacture.

As depicted in fig. 3, in between pairs of adjacent feet are situated valleys 8. As shown in Fig. 2 and Fig. 3, a bottom line 81 of each of these valleys 8 is coincident with the underlying geometrical form S1. As such, hemispherical surface S1 results from the revolution of a bottom-line 81 of the valley 8 formed by two adjacent feet 7 around the central axis of the bottle, as exemplarily illustrated in Fig 2. The feet 7, together with the valleys 8 form a petaloid base formation on which the bottle can stand vertically. The term petaloid is to be understood as given in the introduction above.

We will now proceed to define the parameters necessary to describe the optimized base of the present invention.

### Maximum Foot Depth

The congruent surfaces S2 are the surfaces that form each foot 7 as illustrated in fig. 2. Also as depicted in fig. 2, the maximum foot depth F describes the magnitude of the longest possible normal vector on the hemispherical surface S1 to a point on Surface S2. In other words, the maximum foot depth F is the maximum distance, measured in a direction orthogonal to the hemispherical surface S1, from said hemispherical surface to the congruent surfaces S2. As will be appreciated, the maximum foot depth F depends on the size as well the shape of each foot 7.

### Sitting Radius

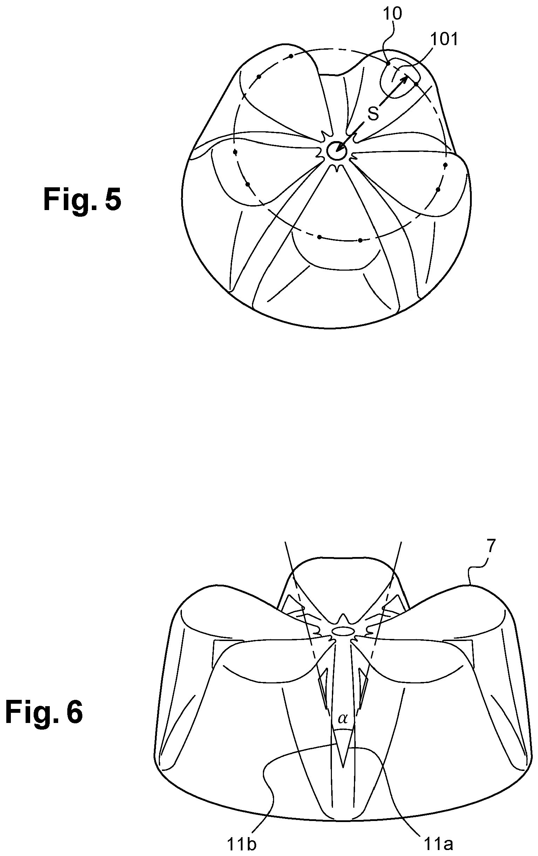

Reference is now made to fig. 4 and fig. 5. When the bottle is placed upright on a flat surface 9, each of the feet 7 will make contact with the surface 8 at a foot to surface contact area 101. The contact area may or may not be contiguous. Within the contact area, there are contact points which are closer to the axis X and contact points which are further from the axis X. A sitting radius S is defined as the radius of the (largest) circle formed by the (outermost from the axis) foot to surface contact points 10, as illustrated. The sitting radius is important to the stability of the bottle when sitting on a flat surface.

### Minimum Transition Radius

As seen for example in fig. 3, the base 6 does not exhibit sharp edges with the edges of each foot being rounded. The minimum of radius within the geometry of each foot 7 is termed the Minimum Transition Radius R. The Minimum Transition Radius R denotes the radius of edge roundings being the transition regions between the feet 7 and the remaining parts of the base and or the bottle geometry. That is to say, a bottle described as having a minimum radius of curvature of any part of the base of 7mm means that locally within the base, there is no radius which is sharper than 7mm.

### Angle between Valley Flanks

As depicted in fig. 6, the opposing sides or flanks 11a, 11b of adjacent feet 7 oppose each other across the interspersed valley 8. The angle *α* between pairs of opposing valley flanks 11a, 11b is a measure of the steepness of the valley. Stated in mathematical terms, the angle between opposing flanks 11a, 11b is defined as the angle between the normal vectors to each pair of opposing flanks.

### Optimization of the Base

In light of the objectives described above, the inventors have conducted trials on numerous base designs. For each design considered, tests were performed to determine if that bottle was sufficiently mechanically sound for use for containment of carbonated soft drink. Specifically, the tests detailed in the introduction above were conducted. These are: resistance to an adequate internal pressure normally associated with a carbonate soft drink; resistance to a drop from 180cm onto a steel plate; resistance towards a stress cracking regime consisting of placing a pressurized bottle solution of sodium hydroxide; and resistance towards temperature cycling.

Table 1 shows the results of the testing conducted on each of 13 sample bottle designs. All tested bottles were made of PET. For each phase of testing, for each design, in excess of 11 bottles where tested. For the drop test, 25 bottles of each design were tested.

The column furthest to the right shows whether the bottle met the mechanical standards described above. Where a bottle maintained integrity across each test, the word "PASS" is indicated. For bottles which failed during testing, the word "FAIL" is indicated.

The column second from right indicates the blowing pressure required during manufacture of each particular bottle. Also given are the parameters of Maximum foot depth to sitting radius ratio; Minimum transition radius; and Angle between valley flanks for each tested bottle.

**TABLE 1**

| **Bottle Number** | **Max. foot depth by sitting radius** | **Feet radius transition / mm** | **Angle between valley flanks / degrees** | **Blowing pressure / bars** | **Mechanical testing** |
|---|---|---|---|---|---|
| 1 | 0,46 | 6 | 44,6 | 22 | PASS |
| 2 | 0,53 | 5,2 | 77,9 | 22 | PASS |
| **3** | **0,51** | **7** | **36,91** | **16** | **PASS** |
| 4 | 0,54 | 7 | 50 | 19 | FAIL |
| **5** | **0,49** | **7** | **43,77** | **14** | **PASS** |
| 6 | 0,46 | 6 | 45,11 | 16 | FAIL |
| 7 | 0,42 | 6 | 45,13 | 16 | FAIL |
| 8 | 0,47 | 6 | 45,11 | 16 | FAIL |
| 9 | 0,53 | 7 | 39,8 | 20 | PASS |
| **10** | **0,51** | **7** | **41,23** | **16** | **PASS** |
| 11 | 0,48 | 7 | 43,84 | 16 | FAIL |
| 12 | 0,46 | 7 | 43,77 | 16 | FAIL |
| **13** | **0,50** | **7** | **43,77** | **16** | **PASS** |

Bottle 1 represents an example of a commercially available prior art bottle. Although, this bottle achieved a PASS with respect to the mechanical properties, manufacture necessitated a blowing pressure of 22 bar. Likewise, bottle 2 was also able to withstand the mechanical testing regime but at a cost of requiring a blowing pressure during manufacture of 22 bar.

For bottles with bases having a minimum radius of curvature of any part of the base or specifically between the feet 7 and other parts of the bottle geometry of 7mm, the inventors have determined that bottle base designs having the following combination of properties will achieve the desired mechanical properties whilst also requiring a blowing pressure of 16 bars or less.

Most essentially, the inventors have determined that where the ratio between the maximum foot depth and the sitting radius is 0.5 ±0.01, this result is achieved.

By restricting designs to these parameter ranges, the objectives of the invention are achieved. For example, bottles 3, 5, 10 and 13 of Table 1 are bottles according to the present invention. These bottles pass the mechanical testing regime thus gave best results. Bottle configurations 3, 10 and 13 require a blowing pressure during manufacture of 16 bar; bottle 5 is manufactured using a blowing pressure of 14 bar. This is a pressure significantly less than has been known until now.

### Bottle Manufacture

A mold having a cavity shaped to form the bottle described above is provided. A temperature conditioned hollow preform is inserted into the mold. In some arrangements, a stretch rod is used to stretch the preform along the longitudinal axis of the bottle. The stretch rod being extendable along the longitudinal axis is pushed downward stretching the preform longitudinally until the bottom of the preform is closely adjacent the bottom of the cavity.

A fluid, typically a gas is blown into the interior of the hollow preform causing it to take on the form of the mold. The introduction of fluid may commence before the stretch rod has completed the longitudinal extension of the preform. Owing to the configuration of a bottle according to the invention, having a base as described above, the pressure required to blow such a bottle is less than 16 bar. Following cooling, the mold is removed from the bottle.

## Claims

1. A bottle (1) for holding a carbonated beverage comprising:
a body (5);
a base (6) extending from the lower end of the body (5), the base having a substantially hemispherical underlying geometrical form (S1), the base comprising:
a plurality of feet (7) projecting downwards from the underlying geometrical form (S1);
valleys (8) separating adjacent pairs of feet (7), each valley (8) having a bottom line (81) following substantially the underlying geometrical form (S1);
the feet and valleys together forming a petaloid foot formation having axial symmetry around the longitudinal axis (X) of the bottle;
a maximum foot depth (F) being the maximum normal distance from the underlying geometrical form (S1) to a surface of a foot (S2);
a sitting radius (S) being the radius of the largest circle formed by the points of contact (10) with the feet and a flat surface (9) when the bottle is stood vertically on the flat surface;
**characterized in that**
the ratio between the maximum foot depth and the sitting radius is 0.5 ±0.01.

2. The bottle of claim 1 wherein the minimum radius of curvature of any part of the base (6) is 6.5 mm.

3. The bottle of claim 1 wherein the minimum radius of curvature of any part of the base (6) is 7mm.

4. The bottle of claim 3 having a ratio between the maximum foot depth and the sitting radius of 0.51; and an angle between opposed pairs of valley flanks (11a, 11b) of adjacent pairs of feet (7) of 37 degrees.

5. The bottle of claim 3 having a ratio between the maximum foot depth and the sitting radius of 0.49; and an angle between opposed pairs of valley flanks (11a, 11b) of adjacent pairs of feet (7) of 44 degrees.

6. The bottle of claim 3 having a ratio between the maximum foot depth and the sitting radius of 0.51; and an angle between opposed pairs of valley flanks (11a, 11b) of adjacent pairs of feet (7) of 41 degrees.

7. The bottle of claim 3 having a ratio between the maximum foot depth and the sitting radius of 0.50; and an angle between opposed pairs of valley flanks (11a, 11b) of adjacent pairs of feet (7) of 44 degrees.

8. The bottle of any of claims 1 to 7 wherein the plurality of feet (7) is five feet.

9. The bottle of any of claims 1 to 8 wherein the bottle is a 0.5 litre type bottle.

10. The bottle of any of claims 1 to 8 wherein the bottle is a 1.5 litre type bottle.

11. The bottle of any of claims 1 to 10 wherein the bottle is formed of PET.

12. The bottle of any of claims 1 to 10 wherein the bottle is formed of PEF.

13. A method for manufacturing a bottle for holding a carbonated beverage comprising:
providing an openable blow mold cavity defining the form of a bottle according to any of claims 1 to 12;
providing a hollow preform;
temperature conditioning the preform;
inserting the preform into the blow mold cavity;
injecting a fluid pressurized at a pressure of less than 16 bar into the preform such that the preform is stretched outwards and into contact with the surface of the blow mold cavity so as to take on the shape of the bottle defined by the blow mold cavity;
opening the blow mold cavity and removing the bottle formed therein.

## Patentansprüche

1. Flasche (1) zum Aufbewahren eines kohlensäurehaltigen Getränks, umfassend:
einen Körper (5);
eine Basis (6), die sich von dem unteren Ende des Körpers (5) erstreckt, wobei die Basis eine im Wesentlichen halbkugelförmige zugrundeliegende geometrische Form (S1) aufweist, die Basis umfassend:
eine Vielzahl von Füßen (7), die von der zugrundeliegenden geometrischen Form (S1) nach unten vorstehen;
Täler (8), die benachbarte Paare von Füßen (7) trennen, wobei jedes Tal (8) eine Bodenlinie (81) aufweist, die im Wesentlichen der zugrundeliegenden geometrischen Form (S1) folgt;
wobei die Füße und Täler, die zusammen eine blütenblattartige Fußausbildung ausbilden, eine Axialsymmetrie um die Längsachse (X) der Flasche aufweisen;
eine maximale Fußtiefe (F), die der maximale Normalabstand von der zugrundeliegenden geometrischen Form (S1) zu einer Oberfläche eines Fußes (S2) ist;
einen Standradius (S), der der Radius des größten Kreises ist, der durch die Kontaktpunkte (10) mit den Füßen und einer ebenen Oberfläche (9) ausgebildet wird, wenn die Flasche vertikal auf der ebenen Oberfläche aufgestellt ist;
**dadurch gekennzeichnet, dass**
das Verhältnis zwischen der maximalen Fußtiefe und dem Sitzradius beträgt 0,5 ± 0,01.

2. Flasche nach Anspruch 1, wobei der minimale Krümmungsradius jedes beliebigen Teils der Basis (6) 6,5 mm beträgt.

3. Flasche nach Anspruch 1, wobei der minimale Krümmungsradius jedes beliebigen Teils des Bodens (6) 7 mm beträgt.

4. Flasche nach Anspruch 3, aufweisend ein Verhältnis zwischen der maximalen Fußtiefe und dem Standradius von 0,51; und einen Winkel zwischen gegenüberliegenden Paaren von Talflanken (11a, 11b) von benachbarten Paaren von Füßen (7) von 37 Grad.

5. Flasche nach Anspruch 3, aufweisend ein Verhältnis zwischen der maximalen Fußtiefe und dem Standradius von 0,49; und einen Winkel zwischen gegenüberliegenden Paaren von Talflanken (11a, 11b) von benachbarten Paaren von Füßen (7) von 44 Grad.

6. Flasche nach Anspruch 3, aufweisend ein Verhältnis zwischen der maximalen Fußtiefe und dem Standradius von 0,51; und einen Winkel zwischen gegenüberliegenden Paaren von Talflanken (11a, 11b) von benachbarten Paaren von Füßen (7) von 41 Grad.

7. Flasche nach Anspruch 3, aufweisend ein Verhältnis zwischen der maximalen Fußtiefe und dem Standradius von 0,50; und einen Winkel zwischen gegenüberliegenden Paaren von Talflanken (11a, 11b) von benachbarten Paaren von Füßen (7) von 44 Grad.

8. Flasche nach einem der Ansprüche 1 bis 7, wobei die Vielzahl von Füßen (7) fünf Füße ist.

9. Flasche nach einem der Ansprüche 1 bis 8, wobei die Flasche eine Flasche vom 0,5-Liter-Typ ist.

10. Flasche nach einem der Ansprüche 1 bis 8, wobei die Flasche eine Flasche vom 1,5-Liter-Typ ist.

11. Flasche nach einem der Ansprüche 1 bis 10, wobei die Flasche aus PET ausgebildet ist.

12. Flasche nach einem der Ansprüche 1 bis 10, wobei die Flasche aus PEF ausgebildet ist.

13. Verfahren zum Herstellen einer Flasche zum Halten eines kohlensäurehaltigen Getränks, umfassend:
Bereitstellen eines öffenbaren Blasformhohlraums, der die Form einer Flasche nach einem der Ansprüche 1 bis 12 definiert;
Bereitstellen eines hohlen Vorformlings;
Temperaturkonditionieren des Vorformlings;
Einsetzen des Vorformlings in den Blasformhohlraum;
Einspritzen eines Fluids, druckbeaufschlagt bei einem Druck von weniger als 16 bar in den Vorformling, derart, dass der Vorformling nach außen gedehnt und in Kontakt mit der Oberfläche des Blasformhohlraums gebracht wird, um die durch den Blasformhohlraum definierte Form der Flasche anzunehmen;
Öffnen des Blasformhohlraums und Entfernen der darin ausgebildeten Flasche.

## Revendications

1. Bouteille (1) destinée à contenir une boisson gazeuse, comprenant :
un corps (5) ;
une base (6) s'étendant depuis l'extrémité inférieure du corps (5), la base ayant une forme géométrique sous-jacente sensiblement hémisphérique (S1), la base comprenant :
une pluralité de pieds (7) faisant saillie vers le bas depuis la forme géométrique sous-jacente (S1) ;
des vallées (8) séparant des paires adjacentes de pieds (7), chaque vallée (8) ayant une ligne de fond (81) suivant sensiblement la forme géométrique sous-jacente (S1) ;
les pieds et les vallées formant ensemble une formation de pieds pétaloïde ayant une symétrie axiale autour de l'axe longitudinal (X) de la bouteille ;
une profondeur de pied maximale (F) étant la distance normale maximale de la forme géométrique sous-jacente (S1) à la surface d'un pied (S2) ;
un rayon d'assise (S) étant le rayon du plus grand cercle formé par les points de contact (10) avec les pieds et une surface plane (9) lorsque la bouteille est posée verticalement sur la surface plane ;
**caractérisée en ce que**
le rapport entre la profondeur de pied maximale et le rayon d'assise est de 0,5 ± 0,01.

2. Bouteille selon la revendication 1, dans laquelle le rayon de courbure minimal d'une quelconque partie de la base (6) est de 6,5 mm.

3. Bouteille selon la revendication 1, dans laquelle le rayon de courbure minimal d'une quelconque partie de la base (6) est de 7 mm.

4. Bouteille selon la revendication 3, ayant un rapport entre la profondeur de pied maximale et le rayon d'assise de 0,51 ; et un angle entre des paires opposées de flancs de vallée (11a, 11b) de paires de pieds (7) adjacentes de 37 degrés.

5. Bouteille selon la revendication 3, ayant un rapport entre la profondeur de pied maximale et le rayon d'assise de 0,49 ; et un angle entre des paires opposées de flancs de vallée (11a, 11b) de paires de pieds (7) adjacentes de 44 degrés.

6. Bouteille selon la revendication 3, ayant un rapport entre la profondeur de pied maximale et le rayon d'assise de 0,51 ; et un angle entre des paires opposées de flancs de vallée (11a, 11b) de paires de pieds (7) adjacentes de 41 degrés.

7. Bouteille selon la revendication 3, ayant un rapport entre la profondeur de pied maximale et le rayon d'assise de 0,50 ; et un angle entre des paires opposées de flancs de vallée (11a, 11b) de paires de pieds (7) adjacentes de 44 degrés.

8. Bouteille selon l'une quelconque des revendications 1 à 7, dans laquelle la pluralité de pieds (7) est de cinq pieds.

9. Bouteille selon l'une quelconque des revendications 1 à 8, dans laquelle la bouteille est une bouteille de type 0,5 litre.

10. Bouteille selon l'une quelconque des revendications 1 à 8, dans laquelle la bouteille est une bouteille de type 1,5 litre.

11. Bouteille selon l'une quelconque des revendications 1 à 10, dans laquelle la bouteille est formée de PET.

12. Bouteille selon l'une quelconque des revendications 1 à 10, dans laquelle la bouteille est formée de PEF.

13. Procédé de fabrication d'une bouteille destinée à contenir une boisson gazeuse, comprenant :
la fourniture d'une cavité de moule de soufflage pouvant s'ouvrir définissant la forme d'une bouteille selon l'une quelconque des revendications 1 à 12 ;
la fourniture d'une préforme creuse ;
le conditionnement de la température de la préforme ;
l'insertion de la préforme dans la cavité du moule de soufflage ;
l'injection d'un fluide mis sous pression à une pression inférieure à 16 bar dans la préforme de telle sorte que la préforme soit étirée vers l'extérieur et en contact avec la surface de la cavité de moule de soufflage de manière à prendre la forme de la bouteille définie par la cavité de moule de soufflage ;
l'ouverture de la cavité de moule de soufflage et le retrait de la bouteille qui est formée dans celle-ci.
